# EUROPÄISCHE PATENTSCHRIFT

(11) **EP 0 949 096 B1**
(45) Veröffentlichungstag und Bekanntmachung des Hinweises auf die Patenterteilung: **09.11.2005**
(21) Anmeldenummer: 99105421.4
(22) Anmeldetag: 17.03.1999
(51) Int. Cl.: B60H 1/00, G05D 27/02, G01J 5/04

(54) **Kraftfahrzeug mit einer Heizungs- und Belüftungs- bzw. Klimaanlage**
Vehicle with a heating and ventilating or air conditioning device
Véhicule avec un dispositif de chauffage et d'aération ou de climatisation

(30) Priorität: 25.03.1998 DE 19813093
(43) Veröffentlichungstag der Anmeldung: 13.10.1999
(73) Patentinhaber: ADAM OPEL AG, 65423 Rüsselsheim (DE)
(72) Erfinder: Jordan, Frank Dipl.-Phys., 65428 Rüsselsheim (DE); Sünner, Tobias Dr. rer. nat., 65428 Rüsselsheim (DE)
(74) Vertreter: Daniel, Ulrich W.P.

(56) Entgegenhaltungen:
- EP-A- 0 492 352
- DE-A- 3 821 743
- DE-A- 19 753 884

## Beschreibung

Die Erfindung bezieht sich auf ein Kraftfahrzeug mit einer Heizungs- und Belüftungs- bzw. Klimaanlage, mit den im Oberbegriff des Patentanspruchs 1 angegebenen Merkmalen, wie es aus der DE-OS 38 21 743 bekannt ist.

In der DE-OS 38 21 743 ist ein Sonnensensor beschrieben, der zur Kompensation eines Temperaturfehlers einen Temperatursensor in seinem Gehäuse nutzt. Der Temperatursensor ist thermisch von der Umgebung des Gehäuses entkoppelt, so daß die Temperatur der Sonnensensorelemente erfaßt wird.

Aus der Praxis und aus diversen Schriften ist bekannt, daß moderne Heizungs-, Belüftungs- bzw. Klimaanlagen die Kraftfahrzeug-Innenraumtemperatur auf der Basis von sensorisch erfaßten Innentemperatur-Meßwerten steuern. Dazu ist zumindest ein Innenraumtemperatur-Sensor im Kraftfahrzeug-Innenraum anzuordnen. Aufgrund einer sehr differenten Temperaturverteilung im Innenraum ist es mit hohem Aufwand verbunden, einen repräsentativen Innenraum-Temperaturwert zu bestimmen. Temperatursensoren sind entweder im Bereich einer Steuereinheit der Heizungs-, Belüftungs- bzw. Klimaanlage innerhalb/unterhalb der Armaturentafel angeordnet oder sie werden auch im Dachbereich des Fahrzeugs untergebracht. Je nach Anzahl der zur Anwendung kommenden Sensoren ist ein relativ hoher Aufwand im Zusammenhang mit der Sensoranordnung und -verkabelung vonnöten.

Es ist Aufgabe der Erfindung, bei Fahrzeugen nach dem Oberbegriff des Patentanspruchs 1 einen repräsentativen Innenraumtemperatur-Meßwert mit geringem Aufwand bereitzustellen, auf dessen Basis eine komfortable Steuerung der Innenraumtemperatur erfolgen kann.

Zur Lösung dieser Aufgabe zeichnet sich das Kraftfahrzeug durch die im Patentanspruch 1 angegebenen Merkmale aus. Einzelheiten der Erfindung ergeben sich aus den Patentansprüchen 2 bis 6 und der folgenden Beschreibung.

Die Heizungs- und Belüftungs- bzw. Klimaanlage eines Kraftfahrzeuges weist zur Gewinnung von Eingangswerten einen Sonnensensor und einen Innenraumtemperatur-Sensor auf, wobei beide Sensoren im Gehäuse des Sonnensensors angeordnet sind. Der an sich bekannte Temperatursensor im Sonnensensorgehäuse wird also erfindungsgemäß zur Gewinnung eines Innenraumtemperatur-Meßsignals genutzt, so daß ein separater Innenraumtemperatur-Sensor entfallen kann.

Aus Praxisuntersuchungen ist bekannt, daß es von Vorteil ist, die Innenraumtemperatur im Kraftfahrzeug möglichst an einem weit oben im Fahrzeug befindlichen Ort zu erfassen. Bislang hat man jedoch die Oberfläche der Armaturentafel als ungeeigneten Ort dafür angesehen, da davon ausgegangen wurde, daß der Einfluß der Sonneneinstrahlung dort negativ ist, also den Innenraumtemperatur-Meßwert verfälscht. In der Folge hat man Sensororte an weiter unten im Kraftfahrzeug gelegenen Orten oder sehr aufwendige Sensoranordnungen im Dachbereich realisiert.

Es hat sich herausgestellt, daß es möglich ist, den Temperatursensor auf der Armaturentafel anzuordnen und dort von der Armaturentafel-Oberfläche zu entkoppeln, so daß er sehr eng an die dortige Lufttemperatur angekoppelt ist. Somit hat sich die Möglichkeit ergeben, den auf der Armaturentafel angeordneten Sonnensensor mit dem Innenraumtemperatur-Sensor in eine bauliche Einheit zu bringen und mit nur einem Steckverbinder zu kontaktieren, was wesentliche Kosteneinsparungen zur Folge hat.

Bei Nutzung eines Innenraumtemperatur-Modells bei der Steuerung der Innenraumtemperatur wird nur ein Start-Wert der Innenraumtemperatur benötigt, den der Innenraumtemperatur-Sensor auf der Armaturentafel liefert. Dieser Start-Wert entspricht in sehr guter Annäherung der tatsächlichen Kopfraumtemperatur im Fahrzeug.

Je nach Sensortyp ist die Ankopplung des Innenraumtemperatur-Sensorwertes an die Lufttemperatur noch zu verbessern, wenn der Sensor beschattet wird, wobei natürlich der Sonnensensor nicht von dieser Beschattung beeinflußt werden darf. Einzelheiten der Erfindung ergeben sich aus der folgenden Beschreibung des Ausführungsbeispiels. Von den zugehörigen Figuren zeigt
- Fig. 1:: einen mit einem Innenraumtemperatur-Sensor baulich kombinierten Sonnensensor auf der Armaturentafel eines Kraftfahrzeuges;
- Fig. 2:: ein Ausführungsbeispiel eines mit einem Innenraumtemperatur-Sensor gekoppelten Sonnensensors in vergrößertem Maßstab.

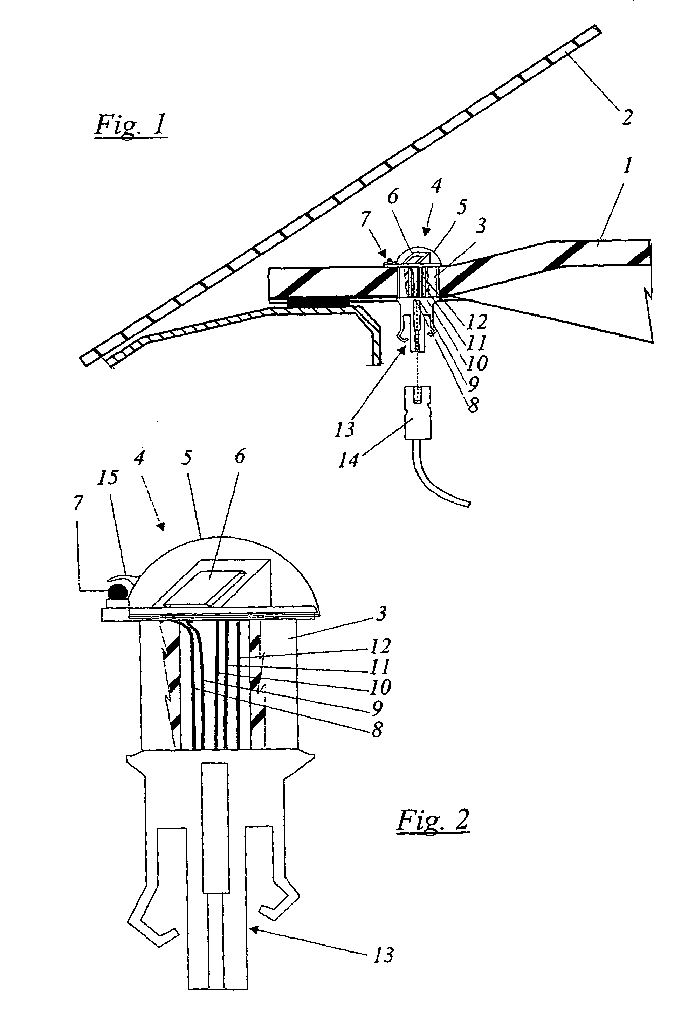

Aus Figur 1 ist ein vorderer Bereich einer Armaturentafel 1 und ein Teil einer Windschutzscheibe 2 ersichtlich, wobei auf die Darstellung erfindungsunwesentlicher Details verzichtet wurde.

Ein Gehäuse 3 eines Sonnensensors 4 ist in eine Öffnung der Armaturentafel 1 eingeclipst und dort verdrehsicher gehaltert. Der Sonnensensor 4 besteht aus zwei unter einer lichtdurchlässigen Haube 5 angeordneten Sensorelementen 6, wobei nur eines dieser Sensorelemente 6 in den Figuren gezeigt ist. Mittels der Sensorelemente 6 wird die aus verschiedenen Richtungen kommende Sonneneinstrahlung auf das Fahrzeug sensiert, wie dies bekannt ist.

Ein Innenraumtemperatur-Sensor 7 ist außerhalb der Haube 5 am Gehäuse 3 befestigt, dabei aber thermisch vom Gehäuse 3 und der Armaturentafel 1 entkoppelt. Er sensiert die Lufttemperatur im Bereich des Sonnensensors 4, die als repräsentativer Wert für die Kraftfahrzeug-Innenraumtemperatur angesehen wird.

Der Innenraumtemperatur-Sensor 7 und die Sensorelemente 6 sind über elektrische Leitungen 8 bis 12 mit einer nicht dargestellten Steuereinheit einer Heizungs- und Belüftungs- bzw. Klimaanlage des Fahrzeugs verbunden, könnten aber auch an einen Kraftfahrzeug-BUS angekoppelt sein. Dazu sind die Leitungen 8 bis 12 durch das Gehäuse 3 hindurch auf einen Steckverbinder 13 geführt, der eine Baueinheit mit dem Gehäuse 3 bildet. Somit sind die Sensorelemente 6 und der Innenraumtemperatur-Sensor 7 mittels nur eines Gegensteckverbinders 14 mit der Steuereinheit kontaktierbar. Der Montageaufwand für die derart kombinierte Sensoreinheit ist denkbar gering.

Die in Figur 2 gezeigte Sensoreinheit mit Sonnensensor 4 und Innenraumtemperatur-Sensor 7 entspricht im wesentlichen der auch in Figur 1 dargestellten Sensoreinheit. Hier wurde jedoch zusätzlich an der Haube 5 ein Schirm 15 zur Beschattung des Innenraumtemperatur-Sensors 7 vorgesehen, so daß die Sonneneinstrahlung keine negativen Auswirkungen auf den Temperaturmeßwert hat. Die Sensoreinheit könnte bei anderer Ausführung der Erfindung auch über einem Innenraumtemperatur-Sensor angeordnete Sonnensensorelemente aufweisen, so daß keine Notwendigkeit zur weiteren Beschattung besteht.

Der derartige, mit geringem Aufwand montierte Sonnensensor 4 mit Innenraumtemperatur-Sensor 7 liefert Meßwerte, auf deren Basis die Heizungs- und Belüftungs- bzw. Klimaanlage des Fahrzeugs zu steuern ist. Bei Verwendung eines Temperaturmodells in der Steuerung liefert der Innenraumtemperatur-Sensor 7 ausschließlich einen Modell-Start-Wert, der hinreichend genau vom Innenraumtemperatur-Sensor 7 bestimmt wird.

## Patentansprüche

1. Kraftfahrzeug mit einer Heizungs- und Belüftungs- bzw. Klimaanlage, der Meßwerte zumindest eines Sonnensensors (4) und zumindest eines Temperatursensors (7) zugeleitet werden, wobei der Temperatursensor (7) an und der Sonnensensor (4) in nur einem gemeinsamen Sensorgehäuse (3) im Kraftfahrzeug-Innenraum angeordnet sind, **dadurch gekennzeichnet, daß** der Temperatursensor (7) als einziger Innenraumtemperatur-Sensor (7) zur Erfassung der Temperatur des Kraftfahrzeug-Innenraumes dient.

2. Kraftfahrzeug nach Anspruch 1, **dadurch gekennzeichnet, daß** der Innenraumtemperatur-Sensor (7) bei Betriebsbeginn der Heizungs- und Belüftungs- bzw. Klimaanlage einen Start-Temperaturwert an eine Steuereinheit der Anlage liefert und die Steuereinheit auf Basis dieses Start-Temperaturwertes die Innenraumtemperatur anhand eines Innenraumtemperatur-Modells steuert.

3. Kraftfahrzeug nach Anspruch 1 oder 2, **dadurch gekennzeichnet, daß** das Sensorgehäuse (3) auf einer Armaturentafel (1) des Fahrzeugs oder in diese integriert nahe einer Windschutzscheibe (2) angeordnet ist.

4. Kraftfahrzeug nach einem der Ansprüche 1 bis 3, **dadurch gekennzeichnet, daß** der Innenraumtemperatur-Sensor (7) derart am Sensorgehäuse (3) angeordnet ist, daß er thermisch entkoppelt vom Sensorgehäuse (3) und von der Armaturentafel (1) ist und annähernd in thermischem Gleichgewicht mit der ihn umgebenden Luft steht.

5. Kraftfahrzeug nach Anspruch 4, **dadurch gekennzeichnet, daß** der Innenraumtemperatur-Sensor (7) durch Mittel (15) zur Beschattung vor direkter Sonneneinstrahlung geschützt ist.

6. Kraftfahrzeug nach einem der Ansprüche 1 bis 5, **dadurch gekennzeichnet, daß** elektrische Anschlüsse des Sonnensensors (4) und des als Innentemperatursensor (7) fungierenden Temperatursensors über nur einen Steckverbinder (13) mit der Steuereinheit der Heizungs-, Belüftungs- bzw. Klimaanlage oder mit einem Kraftfahrzeug-BUS kontaktierbar sind.

## Claims

1. A motor vehicle incorporating a heating and ventilation or air conditioning system to which the measured values from at least one sun sensor (4) and at least one temperature sensor (7) are transmitted, wherein the temperature sensor (7) is arranged on and the sun sensor (4) is arranged in only one common sensor housing (3) in the interior of the motor vehicle, **characterized in that** the temperature sensor (7) serves as the only interior temperature sensor (7) for detecting the temperature in the interior of the motor vehicle.

2. A motor vehicle in accordance with Claim 1, **characterized in that** the interior temperature sensor (7) supplies a starting temperature level to a control unit of the system when operation of the heating and ventilation or air conditioning system is initiated and the control unit controls the interior temperature on the basis of this starting temperature level with the aid of an interior temperature model.

3. A motor vehicle in accordance with Claim 1 or 2, **characterized in that** the sensor housing (3) is arranged on an instrument panel (1) of the vehicle or is integrated therein close to a windscreen (2).

4. A motor vehicle in accordance with any of the Claims 1 to 3, **characterized in that** the interior temperature sensor (7) is arranged on the sensor housing (3) in such a manner that it is thermally decoupled from the sensor housing (3) and from the instrument panel (1) and is in approximately thermal equilibrium with the air surrounding it.

5. A motor vehicle in accordance with Claim 4, **characterized in that** the interior temperature sensor (7) is protected from direct exposure to the sun by means of a shading means (15).

6. A motor vehicle in accordance with any of the Claims 1 to 5, **characterized in that** electrical connections from the sun sensor (4) and the temperature sensor functioning as an interior temperature sensor (7) are connectible to the control unit of the heating, ventilation or air conditioning system or to a motor vehicle BUS via just one plug connector (13).

## Revendications

1. Véhicule automobile avec une installation de chauffage et d'aération, ou de climatisation, à laquelle sont acheminées des valeurs de mesure d'au moins un capteur solaire (4) et d'au moins un capteur de température (7), le capteur de température (7) et le capteur solaire (4) étant disposés dans un seul boîtier de capteur (3) commun dans l'espace intérieur du véhicule automobile, **caractérisé en ce que** le capteur de température (7) sert de seul capteur (7) de température de l'espace ultérieur pour la saisie de la température de l'espace intérieur du véhicule automobile.

2. Véhicule automobile selon la revendication 1, **caractérisé en ce que** le capteur de température (7) de l'espace intérieur émet au début du fonetionnement de l'installation de chauffage et d'aération, respectivement de climatisation, une valeur de température initiale à une unité de régulation de l'installation et **en ce que** l'unité de régulation régule la température de l'espace intérieur sur la base de cette valeur initiale de température à l'aide d'un modèle de température de l'espace intérieur.

3. Véhicule automobile selon la revendication 1 ou 2, **caractérisé en ce que** le boîtier de capteur (3) est disposé au voisinage d'un pare-brise (2) sur un tableau de bord (1) du véhicule ou intégré dans ce tableau de bord.

4. Véhicule automobile selon l'une des revendications 1 à 3, **caractérisé en ce que** le capteur de température (7) de l'espace intérieur est disposé sur le boîtier de capteur (3) de telle sorte qu'il est thermiquement découplé du boîtier du capteur (3) et du tableau de bord (1) et se trouve à peu près en équilibre thermique avec l'air qui l'environne.

5. Véhicule automobile selon la revendication 4, **caractérisé en ce que** le capteur de température (7) est protégé par des moyens (15) pour être à l'ombre de rayonnements directs du soleil.

6. Véhicule automobile selon l'une des revendications 1 à 5, **caractérisé en ce que** les branchements électriques du capteur solaire (4) et du capteur de température ayant la fonction de capteur de température intérieure (7) sont susceptibles d'être contactés par seulement un connecteur (13) avec l'unité de régulation de l'installation de chauffage, d'aération, respectivement de climatisation ou avec un BUS de véhicule automobile.
